# EUROPEAN PATENT APPLICATION

(11) **EP 4 112 755 A1**
(43) Date of publication of application: **04.01.2023**
(21) Application number: 22190787.6
(22) Date of filing: 25.11.2019
(51) Int. Cl.: C21D 8/12, C21D 6/00, C21D 9/46, C22C 38/00, C22C 38/14, C22C 38/60, H01F 1/147, C21D 1/34, C21D 1/42, C21D 1/76, C22C 38/02, C22C 38/04, C22C 38/06, C22C 38/12, H01F 1/16

(54) **METHOD OF MANUFACTURING NON-ORIENTED ELECTRICAL STEEL SHEET**

(30) Priority: 26.11.2018 JP 2018220268
(62) Divisional of application: 19890895.6
(71) Applicant: JFE Steel Corporation, Tokyo 100-0011 (JP)
(72) Inventor: Okubo, Tomoyuki, Tokyo 100-0011 (JP); Uesaka, Masanori, Tokyo 100-0011 (JP); Zaizen, Yoshiaki, Tokyo 100-0011 (JP); Oda, Yoshihiko, Tokyo 100-0011 (JP)
(74) Representative: Grünecker Patent- und Rechtsanwälte PartG mbB

(57) **Abstract**

To stably improve the magnetic flux density by utilizing induction heating and radiant heating during final annealing of a non-oriented electrical steel sheet. A method of manufacturing a non-oriented electrical steel sheet, including subjecting a slab having a predetermined chemical composition to hot rolling with or without performing hot-rolled sheet annealing, and then to cold rolling either once, or twice or more with intermediate annealing performed therebetween, and then to final annealing, wherein the slab has a ratio of y phase of 30 % or more at a slab heating temperature, a reheating treatment is performed to raise a material temperature by 20 °C or more between a start and an end of the hot rolling, a material before final cold rolling has a recrystallization ratio of less than 80 % and a {100}<011> intensity of 8 or less in a 1/4 layer, and in the final annealing, an average heating rate from 600 °C to 720 °C is 50 °C/s or higher, and an average heating rate from 720 °C to 760 °C is 5 °C/s or higher.

## Description

### TECHNICAL FIELD

This disclosure relates to a method of manufacturing a non-oriented electrical steel sheet.

### BACKGROUND

In recent years, energy saving has been promoted in consideration of protection of the global environment, and it is aimed to improve the efficiency of electrical equipment and reduce the size of electrical equipment. Therefore, it is strongly desired that non-oriented electrical steel sheets, which are widely used as iron core materials of electric equipment, have a high magnetic flux density and low iron loss.

To increase the magnetic flux density of non-oriented electrical steel sheets, it is effective to improve the texture of product sheets, that is, to reduce grains with the {111} orientation and increase grains with the {110} and {100} orientations. Therefore, in the production of non-oriented electrical steel sheets, it is generally performed to increase the crystal grain size before cold rolling and optimize the cold rolling reduction ratio to increase the magnetic flux density.

Other methods of controlling the texture include increasing the heating rate of recrystallization annealing. This is a method often used especially in the production of grain-oriented electrical steel sheets. It is known that when the heating rate of decarburization annealing (primary recrystallization annealing) is increased, grains with the {110} orientation of a decarburization annealed sheet are increased, the secondary recrystallization microstructure is refined, and iron loss is improved (for example, JP H01-290716 A (PTL 1)).

The same applies to non-oriented electrical steel sheets, where techniques have been proposed in which the texture is changed and the magnetic flux density is increased by increasing the heating rate of final annealing (primary recrystallization annealing) (for example, JP H02-11728 A (PTL 2), JP 2011-256437 A (PTL 3), JP 2012-132070 A (PTL 4), and JP 2017-106073 A (PTL 5)).

### CITATION LIST

### Patent Literature

PTL 1: JP H01-290716 A
PTL 2: JP H02-11728 A
PTL 3: JP 2011-256437 A
PTL 4: JP 2012-132070 A
PTL 5: JP 2017-106073 A

### SUMMARY

### (Technical Problem)

The technique of PTL 1 described above is a technique relating to grain-oriented electrical steel sheets, which cannot be directly applied to non-oriented electrical steel sheets.

Further, we examined the technique proposed in PTL 2 with an induction heating method, and it was clear that this technique could not provide a stable effect of increasing the magnetic flux density. The Examples of PTL 2 did not use an induction heating method, and it is considered that the researchers did not recognize such a problem.

PTL 3 is a technique using an induction heating method. However, as a result of our examination, it could not provide a stable effect of increasing the magnetic flux density, either. Additionally, this method requires cooling and reheating after rapid heating, which leads to a problem of high equipment cost.

The Examples of PTL 4 used rapid heating by electrical resistance heating. However, the electrical resistance heating has a problem that it is difficult to be used in final annealing of non-oriented electrical steel sheets because, for example, sparks are generated between a conductor roll and the steel sheet and surface defects are likely to occur.

PTL 5 is an invention in which heating is performed by a combination of induction heating and radiant heating. However, as a result of our examination, it was found that the magnetic flux density effect may not be obtained when the recrystallization ratio before final cold rolling is low.

It could thus be helpful to provide a method of manufacturing a non-oriented electrical steel sheet with which stable improvement of magnetic flux density can be realized by utilizing induction heating and radiant heating during final annealing of the non-oriented electrical steel sheet.

### (Solution to Problem)

We thus provide the following.
1. A method of manufacturing a non-oriented electrical steel sheet, comprising:
   subjecting a slab, which has a chemical composition containing (consisting of), in mass%, C: 0.0050 % or less, P: 0.2 % or less, Si: 4.0 % or less, Mn: 3.0 % or less, Al: 2.0 % or less, S: 0.0050 % or less, N: 0.0050 % or less, O: 0.010 % or less, Ti: 0.0030 % or less and Nb: 0.0010 % or less, with the balance being Fe and inevitable impurities, to hot rolling with or without performing hot-rolled sheet annealing, and then to cold rolling either once, or twice or more with intermediate annealing performed therebetween, and then to final annealing, wherein
   a material before final cold rolling has a recrystallization ratio of less than 80 % and a {100}<011> intensity of 8 or less in a 1/4 layer, and in the final annealing, an average heating rate from 600 °C to 720 °C is 50 °C/s or higher, and an average heating rate from 720 °C to 760 °C is 5 °C/s or higher.
2. The method of manufacturing a non-oriented electrical steel sheet according to 1., wherein the slab has a ratio of γ phase of 30 % or more at a slab heating temperature, and reverse rolling is performed at least once during rough rolling in the hot rolling.
3. The method of manufacturing a non-oriented electrical steel sheet according to 1. or 2., wherein the slab has a ratio of γ phase of 30 % or more at a slab heating temperature, and a reheating treatment is performed to raise a material temperature by 20 °C or more between a start and an end of the hot rolling.
4. The method of manufacturing a non-oriented electrical steel sheet according to any one of 1. to 3., wherein the slab further contains, in mass%, either or both of Sn and Sb of 0.005 % or more and 0.20 % or less, respectively.
5. The method of manufacturing a non-oriented electrical steel sheet according to any one of 1. to 4., wherein the slab further contains, in mass%, at least one selected from the group consisting of Ca: 0.0005 % or more and 0.010 % or less, Mg: 0.0001 % or more and 0.0050 % or less, and REM: 0.001 % or more and 0.020 % or less.

### (Advantageous Effect)

According to the present disclosure, it is possible to stably obtain a product sheet having a high magnetic flux density by heating a material sheet at an appropriate average heating rate in a heating process utilizing induction heating and radiant heating during final annealing of a non-oriented electrical steel sheet, even if the recrystallization ratio before final cold rolling is low.

### BRIEF DESCRIPTION OF THE DRAWINGS

In the accompanying drawings:
FIG. 1 is a graph illustrating the relationship between the {100}<011> intensity in a 1/4 layer of a hot-rolled sheet and the magnetic flux density of a final annealed sheet; and
FIG. 2 is a graph illustrating the relationship between the heating rate in a temperature range of 720 °C to 760 °C in final annealing and the magnetic flux density of a final annealed sheet.

### DETAILED DESCRIPTION

The following describes the experimental results that led to the present disclosure.

Steel containing, in mass%, C: 0.0025 %, P: 0.01 %, Si: 1.34 %, Mn: 0.28 %, Al: 0.26 %, S: 0.0014 %, N: 0.0021 %, O: 0.0025 %, Ti: 0.0005 % and Nb: 0.0001 %, with the balance being inevitable impurities, was melted in a vacuum furnace to obtain a steel ingot, and the obtained ingot was reheated at 1100 °C and then subjected to hot rolling under various conditions to obtain a hot-rolled sheet with a final thickness of 2.3 mm at a finish temperature of 900 °C. The recrystallization ratio of the obtained hot-rolled sheet was about 20 %, and a deformed microstructure (non-recrystallized microstructure) remained in the mid-thickness part. It was confirmed that the ratio of γ phase at 1100 °C was 100 % by both calculation by Thermo-calc and a thermal expansion measurement of the hot-rolled sheet. Additionally, the start temperature of α (ferrite) → γ (austenite) transformation was 1014 °C. As used herein, the start temperature of α → γ transformation means a temperature (equilibrium temperature) at which the γ phase is generated when the steel is heated from room temperature. By setting the finish temperature of the hot rolling lower than the start temperature of α → γ transformation, the processing of a final pass can be performed in a α single phase region.

Then, the obtained hot-rolled sheet was pickled and subjected to cold rolling to obtain a thickness of 0.35 mm, and then subjected to final annealing where a soaking temperature was 900 °C and a soaking time was 10 seconds. The final annealing was performed in an experimental furnace in which a solenoid type induction heating furnace and an electric heating furnace (radiant heating furnace) were combined, and the atmosphere was a dry nitrogen atmosphere in both.

Test pieces of 180 mm × 30 mm were collected from the obtained final annealed sheet along the rolling direction and the width direction respectively, and the magnetic properties were evaluated by Epstein testing in accordance with JIS C 2550-1(2011).

As a result, it was confirmed that, although the magnetic flux density Bso of some samples was increased by increasing the heating rate of the final annealing, variations were observed in the effect of increasing the magnetic flux density.

Next, the relationship with the texture of the material was investigated.

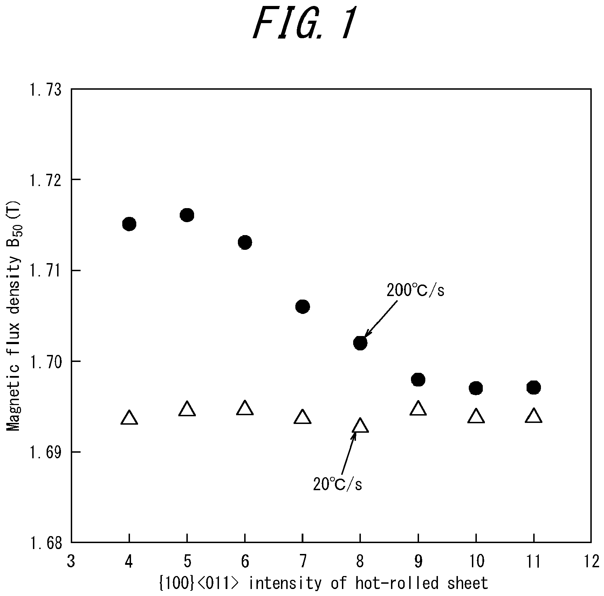

FIG. 1 illustrates the results of investigating the relationship between the {100}<011> intensity in a 1/4 layer of the hot-rolled sheet and the magnetic flux density of the final annealed sheet. Here, the average heating rate from 720 °C to 760 °C in the final annealing was constant at 10 °C/s, and the average heating rate from 600 °C to 720 °C was changed between two sets of condition, 20 °C/s and 200 °C/s, as illustrated in the figure.

As illustrated in the figure, it can be understood that, by setting the {100}<011> intensity (ratio to random intensity) of the hot-rolled sheet to 8 or less, the effect of increasing the magnetic flux density by rapid heating can be obtained.

On the other hand, a cold-rolled sheet whose initial orientation is a hot-rolled sheet having high {100}<011> intensity where a ratio to random intensity is more than 8 is difficult to be recrystallized. Therefore, it is considered that the material cannot be sufficiently recrystallized with an induction heating method, and the effect of increasing the magnetic flux density by rapid heating cannot be obtained.

To reduce the {100}<011> intensity of the hot-rolled steel, it is effective to apply hot-rolled sheet annealing to promote recrystallization and grain growth. However, the application of high-temperature and long-term hot-rolled sheet annealing requires special equipment, which increases the costs. To reduce the {100}<011> intensity of the hot-rolled sheet without using a high-cost process, it is effective to promote recrystallization during the hot rolling by, for example, increasing the ratio of γ phase during slab heating and performing reverse rolling in rough hot rolling, or performing a reheating treatment in the middle of hot rolling.

It should be noted that the effect of increasing the magnetic flux density cannot be obtained only by rapidly heating a steel sheet using only an induction heating device. This is because the heating efficiency of induction heating sharply decreases near the Curie point, so that it can only reach temperature ranges that are insufficient for recrystallizing the material of the present disclosure. To obtain the effect of increasing the magnetic flux density, it is necessary to continuingly increase the heating rate by radiant heating.

A hot-rolled sheet sample whose {100}<011> intensity was 6.2 obtained in the above experiment was subjected to cold rolling to obtain a thickness of 0.35 mm and then heated from room temperature to 720 °C by induction heating at a rate of 150 °C/s, then the temperature was continuingly raised by radiant heating in a temperature range of 720 °C or higher, and the sample was subjected to final annealing where a soaking temperature was 950 °C and a soaking time was 20 seconds. Here, the heating rate from 720 °C to 760 °C was variously changed, and the heating rate after 760 °C was kept constant at 15 °C/s.

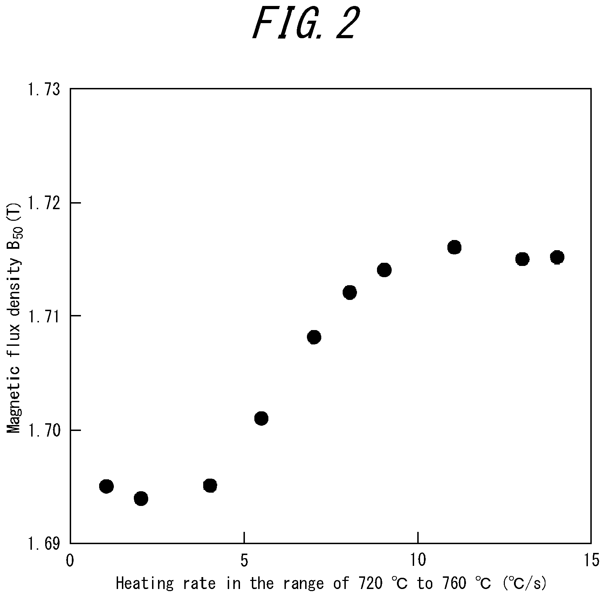

The magnetic flux density of the resulting final annealed sheet is illustrated in FIG. 2.

It can be understood from the figure that, to obtain the effect of increasing the magnetic flux density, it is necessary to set the average heating rate from 720 °C to 760 °C at 5 °C/s or higher in the heating process of final annealing. That is, it is understood that the temperature range of 720 °C to 760 °C is a temperature range in which induction heating shifts to radiant heating, and although the average heating rate in this temperature range tends to decrease, it has a great influence on the magnetic properties. Therefore, it is necessary to adjust operating conditions to achieve an average heating rate of 5 °C/s or higher in the temperature range of 720 °C to 760 °C, such as bringing the induction heating device and the radiant heating device closer to each other, or transferring the steel sheet more quickly than usual.

Next, the reason why the chemical composition of the slab is limited to the above ranges in the present disclosure will be described. Note that the unit "%" relating to the components refers to "mass%" unless specified otherwise.

### C: 0.0050 % or less

C is an element that forms carbides and deteriorates iron loss. The upper limit of C is 0.0050 % in order to suppress the magnetic aging of a product. The lower limit is not specified, but it is preferably 0.0001 % from the viewpoint of suppressing decarburization costs.

### P: 0.2 % or less

P is an element used to adjust the strength of steel. Addition of P is not essential, but the P content is preferably 0.03 % or more in order to obtain the desired strength in the present disclosure. However, when the content exceeds 0.2 %, the steel becomes brittle, and rolling becomes difficult. Therefore, the upper limit of P is 0.2 %.

### Si: 4.0 % or less

Si has the effect of increasing the specific resistance of steel and reducing iron loss. However, when the Si content exceeds 4.0 %, rolling becomes difficult. Therefore, the Si content is in a range of 4.0 % or less. Additionally, a high Si content decreases the magnetic flux density. Therefore, the Si content is more preferably in a range of 3.0 % or less from the viewpoint of increasing the magnetic flux density. When the Si content exceeds 2.5 %, alloy costs for keeping the transformation point in an appropriate temperature range increase. Therefore, the Si content is more preferably in a range of 2.5 % or less. The lower limit is not particularly specified, but it is preferably 1.0 %.

### Mn: 3.0 % or less

Mn has the effect of increasing the specific resistance of steel and reducing iron loss. However, when the Mn content exceeds 3.0 %, the iron loss is rather deteriorated due to precipitation of carbonitrides. Therefore, the Mn content is in a range of 3.0 % or less. On the other hand, when the Mn content is less than 0.3 %, the effect of reducing iron loss is small; when the Mn content is 2.0 % or more, the magnetic flux density decreases remarkably, and alloy costs for keeping the transformation point in an appropriate temperature range increase. Therefore, the Mn content is more preferably in a range of 0.3 % or more and less than 2.0 %, and still more preferably in a range of 0.3 % or more and less than 1.0 %.

### Al: 2.0 % or less

A1 has the effect of increasing the specific resistance of steel and reducing iron loss. For that purpose, the Al content is preferably 0.1 % or more. However, when the Al content exceeds 2.0 %, rolling becomes difficult. Therefore, the Al content is 2.0 % or less. When the Al content is 0.01 % to 0.1 %, fine AlN is precipitated, and iron loss is increased. Therefore, the Al content is more preferably in a range of 0.01 % or less, or 0.1 % or more and 2.0 % or less. Additionally, when the Al content exceeds 0.5 %, alloy costs for keeping the transformation point in an appropriate temperature range increase. Therefore, the Al content is more preferably in a range of 0.01 % or less, or 0.1 % or more and 0.5 % or less.

When the Al content is reduced, the texture is improved, and the magnetic flux density is increased. Therefore, when it is desired to increase the magnetic flux density, the Al content is preferably 0.01 % or less. From the viewpoint of increasing the magnetic flux density, the Al content is more preferably in a range of 0.003 % or less.

### S, N: 0.0050 % or less

S and N increase fine sulfides and fine nitrides respectively, which increases iron loss. When the content of either exceeds 0.0050 %, the adverse effect becomes remarkable. Therefore, the upper limit is 0.0050 %.

### O: 0.010 % or less

O is an element that increases inclusions in steel and increases iron loss. In particular, when the O content exceeds 0.010 %, the adverse effect becomes remarkable. Therefore, the upper limit is 0.010 %.

### Ti: 0.0030 % or less, Nb: 0.0010 % or less

Both Ti and Nb are elements that form carbonitrides and increase iron loss. When the content of Ti and the content of Nb exceed 0.0030 % and 0.0010 % respectively, the adverse effect becomes remarkable. Therefore, the upper limits are 0.0030 % and 0.0010 % respectively.

In the present disclosure, the following elements may be further contained appropriately.

### Sn, Sb: 0.005 % or more and 0.20 % or less

Sn and Sb have the effect of improving the recrystallization texture and improving the magnetic flux density and iron loss, respectively. To obtain this effect, it is necessary to add Sn and Sb in an amount of 0.005 % or more respectively. On the other hand, when the content of either exceeds 0.20 %, the effect is saturated. Therefore, the contents of Sn and Sb are 0.005 % or more and 0.20 % or less in both cases where only Sn or Sb is added and where Sn and Sb are added together.

### Ca: 0.0005 % or more and 0.010 % or less, Mg: 0.0001 % or more and 0.0050 % or less, REM: 0.001 % or more and 0.020 % or less

Ca, Mg and REM have the effect of forming stable sulfides and improving grain growth. To obtain this effect, it is necessary to add Ca, Mg and REM in an amount of 0.0005 %, 0.0001 %, 0.001 % or more, respectively. On the other hand, when they are added in excess of 0.010 %, 0.0050 %, and 0.020 %, respectively, the iron loss is rather deteriorated. Therefore, the contents of Ca, Mg and REM are 0.0005 % or more and 0.010 % or less, 0.0001 % or more and 0.0050 % or less, and 0.001 % or more and 0.020 % or less, respectively.

In the chemical composition of the slab, the balance other than the elements described above is Fe and inevitable impurities.

Next, the method of manufacturing a steel sheet of the present disclosure will be described.

First, molten steel whose chemical composition has been adjusted in a converter or the like is subjected to casting to obtain a slab, the obtained slab is heated as it is or once cooled and then reheated, and hot rolling is performed. The heating temperature of the slab prior to the hot rolling, the finish temperature of the hot rolling, the coiling temperature, etc. are not particularly limited. However, from the viewpoint of ensuring magnetic properties and productivity, it is preferable that the slab heating temperature is in a range of 1000 °C to 1200 °C, the finish temperature of the hot rolling is in a range of 700 °C to 900 °C, and the coiling temperature is in a range of 400 °C to 700 °C.

Although it is acceptable to perform hot-rolled sheet annealing after the hot rolling if necessary, the production method of the present disclosure specifies that the recrystallization ratio of the material before final cold rolling is less than 80 % and preferably less than 50 %. The reason is that, in a material where recrystallization has proceeded sufficiently, recrystallization is randomized, and the {100}<011> intensity is decreased even if the production method of the present disclosure is not used. Therefore, the present disclosure is effective in a case of using a production line with insufficient equipment capacity, such as a case where high-temperature and long-term hot-rolled sheet annealing cannot be applied.

The "material before final cold rolling" in the present disclosure means a material sheet immediately before being subjected to the last cold rolling. That is, in a case where the production method of the present disclosure performs cold rolling only once (one-time cold rolling method), it means a hot-rolled sheet when hot-rolled sheet annealing is not performed, and it means a hot-rolled and annealed sheet when hot-rolled sheet annealing is performed. Further, in a case where the production method of the present disclosure performs cold rolling twice or more, it means an intermediate annealed sheet immediately before being subjected to the last cold rolling.

The recrystallization ratio of the material before final cold rolling is measured in a cross section perpendicular to the width direction of the material (a cross section parallel to the rolling direction, that is, a surface formed by the rolling direction and the sheet thickness direction). A sample including the cross section is collected from the central portion in the width direction, embedded and polished, then a microstructure is exposed by corrosion with nital or the like, and observation is performed with an optical microscope. Recrystallized grains and non-recrystallized grains can be easily identified in a microstructure photograph. In the present disclosure, the area ratio of recrystallized grains in the microstructure of a cross section having a measurement area of 20 mm² including all the area in the sheet thickness direction (that is, the length of the side in the sheet thickness direction is the full length of sheet thickness) is defined as the recrystallization ratio (%).

In the production method of the present disclosure, the {100}<011> intensity (ratio to random intensity) in the 1/4-sheet thickness layer of the material before final cold rolling is 8 or less. The {100}<011> intensity (ratio to random intensity) is an intensity ratio of crystal orientation distribution function (ODF) calculated from data measured by X-ray diffraction (a ratio of the {100}<011> intensity of the material sample to the {100}<011> intensity of a random test material). In the present disclosure, the average value of the number N of measured samples is 3.

A sample to be subjected to X-ray diffraction is prepared by collecting a test piece from the central portion in the width direction, polishing the test piece from the surface layer to a 1/4 layer in the sheet thickness direction to reduce the thickness, and then etching the test piece with 10 % nitric acid for 30 seconds. The 1/4-layer surface of the prepared sample is measured, the (110), (200), and (211) surfaces are measured with the X-ray Schultz method, and the measured data is subjected to ODF analysis to determine the intensity of the {100}<011> orientation. The analysis is performed using ResMat's software Textools, and calculation is performed with the ADC (Arbitrarily Defind Cell) method. The ratio of the intensity of the {100}<011> orientation to random intensity is set to be (φ1, Φ, φ2) = (0, 0, 45) in Bunge's Eulerian angle.

To reduce the {100}<011> intensity, it is effective to set the ratio of γ phase of the slab at the slab heating temperature, that is, the ratio of γ phase of the slab when the slab is heated and subjected to hot rolling, to 30 % or more, and perform reverse rolling at least once in rough rolling.

The "slab heating temperature" means a temperature at which the slab is heated before the start of hot rolling, specifically, it is a temperature at which the slab after casting is further heated as it is, or a temperature at which the slab once cooled after casting is reheated. That is, the slab heating temperature is also the start temperature of rough rolling of the hot rolling.

The method of measuring the ratio of γ phase of the slab at the slab heating temperature is as follows. The test material is held at a temperature of slab heating temperature of ± 5 °C for 30 minutes, and then cooled to 100 °C or lower at a cooling rate of 100 °C/s or higher. A sample, which includes a cross section perpendicular to the width direction of the test material (a cross section parallel to the rolling direction, that is, a surface formed by the rolling direction and the sheet thickness direction), is collected from the central portion in the width direction, embedded and polished, and then elemental mapping is performed with an electron probe microanalyzer (EPMA). A region where γ grains once existed at the slab heating temperature (former γ-grain region) can be identified from the fact that it has a high content of austenite-forming elements (C, Mn) and a low content of ferrite-forming elements (Si, Al, P). In the present disclosure, the area ratio of the former γ grain region in the microstructure of a cross section having a measurement area of 20 mm² including all the area in the sheet thickness direction (that is, the length of the side in the sheet thickness direction is the full length of sheet thickness) is defined as the ratio (%) of γ phase.

Further, to reduce the {100}<011> intensity in the 1/4 layer of the material before final cold rolling, it is also effective to perform a reheating treatment to raise the temperature by 20 °C or more between the start of hot rolling and the end of hot rolling. The upper limit of temperature raised by the reheating treatment is not particularly specified, but it is preferably 100 °C or less in order to suppress the equipment cost.

The above-mentioned treatments that are effective for reducing the {100}<011> intensity may be performed alone or in combination of both.

Both of the treatments promote recrystallization in high temperature ranges during the hot rolling, thereby reducing the {100}<011> intensity even if the recrystallization ratio of the resulting hot-rolled sheet is low. This is because in this case, recrystallization proceeds only in high temperature ranges and hardly proceeds in low temperature ranges. That is, when recrystallization can be promoted in high temperature ranges to reduce the {100}<011> intensity, there is no need to promote recrystallization in low temperature ranges.

In this way, the effect of increasing the magnetic flux density by rapid heating in final annealing can be obtained by setting the {100}<011> intensity (ratio to random intensity) in the 1/4 layer of the hot-rolled sheet to 8 or less. The preferred range of the {100}<011> intensity is 6 or less. The lower limit is not particularly specified. However, since it is necessary to repeatedly randomize the microstructure formed by recrystallization to make the {100}<011> intensity less than 1, the {100}<011> strength is preferably 1 or more.

Methods of increasing the ratio of γ phase of the slab at the slab heating temperature to 30 % or more include increasing the amount of Si and Al, reducing the amount of Mn, and optimizing the slab heating temperature. The finish temperature of hot rolling (the final pass delivery temperature) is desirably in the α single phase region. When the finish temperature is in the α-γ dual phase region or in the γ single phase region, the microstructure of the hot-rolled sheet is refined, and the magnetic flux density of a product sheet is decreased.

Although the ratio of γ phase at the slab heating temperature is preferably high, it is difficult to perform final hot rolling or final annealing in the α phase region if the start temperature of α → γ transformation is too low. Therefore, the α → γ transformation temperature is preferably 900 °C or higher.

Hot-rolled sheet annealing may be optionally performed after the hot rolling.

The soaking temperature and soaking time of the hot-rolled sheet annealing are not particularly limited. However, to suppress the annealing cost, the soaking temperature is preferably 700 °C to 900 °C, and the soaking time is preferably 1 second to 180 seconds.

Following the hot rolling or hot-rolled sheet annealing, the sheet is subjected to cold rolling either once, or twice or more with intermediate annealing performed therebetween, to obtain a predetermined sheet thickness, and then the sheet is subjected to final annealing.

The cold rolling and intermediate annealing may be performed according to a conventional method.

In the present disclosure, it is preferable to perform the heating in the final annealing in two stages by combining induction heating and radiant heating.

The induction heating may be performed with either a solenoid method or a transverse method, or a combination of both. The solenoid method has the advantages of high heating efficiency and excellent temperature uniformity, while the transverse method has the advantage of being able to obtain a relatively high heating rate even above the Curie point of a material. From the viewpoint of equipment cost, it is desirable to use the solenoid method.

On the other hand, the "radiant heating" as used herein refers to a method of heating a steel sheet by radiation from a heating element having a temperature higher than that of the steel sheet such as a radiant tube or an electric heater.

The following describes the heating in the heating process of the final annealing.

Induction heating is used in an early stage of the heating process of the final annealing. To obtain the desired effect of the present disclosure, the average heating rate from 600 °C to 720 °C should be 50 °C/s or higher. It is more preferable that the average heating rate is 100 °C/s or higher. The upper limit of the average heating rate from 600 °C to 720 °C is not particularly specified, but it is preferably about 300 °C/s.

However, since the heating efficiency of induction heating decreases near the Curie point, the effect of increasing the magnetic flux density cannot be obtained unless radiant heating in a second stage of the heating process is started promptly to continuingly promote recrystallization. That is, the effect of increasing the magnetic flux density can be obtained by performing the above-described rapid heating from 600 °C to 720 °C and setting the average heating rate from 720 °C to 760 °C to 5 °C/s or higher and preferably 10 °C/s or higher. On the other hand, the upper limit of the average heating rate from 720 °C to 760 °C is preferably about 30 °C/s.

From the viewpoint of promoting recrystallization, it is preferable that the temperature of the steel sheet is not lowered to 700 °C or lower between the end of induction heating and the start of radiant heating.

The average heating rate in the temperature range below 600 °C is not particularly specified, but it is preferably 1 °C/s or higher from the viewpoint of productivity. Induction heating may be performed with more than one induction heating furnace separately set. Additionally, the steel sheet may be preheated by a radiation furnace before being subjected to induction heating, thereby reducing the equipment cost of the induction heating.

In the final annealing, the soaking temperature is preferably 800 °C to 1100 °C, and the soaking time is preferably 1 second to 180 seconds. When the soaking temperature of the final annealing is lower than 800 °C, the crystal grain growth is insufficient. When the soaking temperature of the final annealing exceeds 1100 °C, the grain size becomes too large, which rather increases iron loss. When the soaking time is shorter than 1 second, the characteristics are unstable. When the soaking time exceeds 180 seconds, the annealing line becomes too long, which is economically disadvantageous.

The annealing atmosphere of the final annealing is preferably a non-oxidizing atmosphere or a reducing atmosphere. For example, it is preferably a dry nitrogen atmosphere or a hydrogen-nitrogen mixed atmosphere having atmospheric oxidizability (PH₂O/PH₂) of 0.1 or less.

Further, after the final annealing, an insulating coating may be applied as necessary to obtain a product sheet. The insulating coating may be any known organic, inorganic, or organic and inorganic mixed coating depending on the purpose.

### EXAMPLES

Steel slabs having the chemical composition and the α→γ transformation point listed in Table 1 were heated at 1100 °C for 30 minutes and then subjected to hot rolling to obtain a sheet thickness of 2.2 mm. The finish temperature of the hot rolling was 800 °C, and the coiling temperature was 550 °C. Further, for some materials, reverse rolling was performed in the second pass of rough rolling, and a reheating treatment was performed with an induction heating device (bar heater) before final rolling.

Next, scale was removed by pickling with or without hot-rolled sheet annealing having a soaking time of 30 seconds performed, and then the sheet was subjected to cold rolling to obtain a sheet thickness of 0.35 mm with a one-time cold rolling method. Table 2 lists the recrystallization ratio and the {100}<011> intensity in the 1/4 layer of the hot-rolled sheet (or the hot-rolled and annealed sheet when hot-rolled sheet annealing was performed).

After that, final annealing was performed with a continuous annealing line that combined a solenoid-type induction heating furnace and a radiant heating furnace with an electric heater. The output of the induction heating device, the line speed, and the furnace temperature of each zone of the radiant heating furnace were adjusted to adjust the heating pattern. Table 2 lists the average heating rate in each temperature range. Here, the average heating rate in a temperature range of 760 °C or higher was kept constant at 20 °C/s.

The atmosphere of the induction heating furnace was dry nitrogen, and in the subsequent radiation heating furnace, the atmosphere had H₂: N₂ = 20: 80 and a dew point: -40 °C (PH₂O/PH₂ = 0.001). The annealing was performed for a soaking time of 15 seconds. After that, an insulating coating was applied to obtain a product sheet.

Test pieces of 280 mm × 30 mm were collected from the product sheet thus obtained along the rolling direction and the width direction, respectively, and magnetic property measurement was performed by Epstein testing in accordance with JIS C 2550-1(2011).

The results are also listed in Table 2.

The underline in the table indicates that it is outside the scope of the present disclosure.

**Table 1**

| Steel No. | Chemical composition (mass%) | | | | | | | | | | | Start temperature of a→γ transformation |
|---|---|---|---|---|---|---|---|---|---|---|---|---|
| | C | P | Si | Mn | Al | S | N | O | Ti | Nb | Others | |
| A | 0.0013 | 0.08 | 0.65 | 0.16 | 0.26 | 0.0031 | 0.0026 | 0.0029 | 0.0012 | 0.0002 | - | 989 |
| B | 0.0021 | 0.01 | 1.36 | 0.35 | 0.23 | 0.0018 | 0.0012 | 0.0023 | 0.0008 | 0.0003 | - | 1003 |
| C | 0.0018 | 0.06 | 1.61 | 0.42 | 0.0005 | 0.0015 | 0.0022 | 0.0036 | 0.0005 | 0.0002 | - | 985 |
| D | 0.0012 | 0.02 | 2.09 | 0.83 | 0.0002 | 0.0016 | 0.0015 | 0.0031 | 0.0006 | 0.0001 | - | 970 |
| E | 0.0016 | 0.01 | 2.30 | 0.65 | 0.0003 | 0.0021 | 0.0025 | 0.0026 | 0.0003 | 0.0001 | - | 1017 |
| F | 0.0018 | 0.01 | 1.73 | 0.35 | 0.21 | 0.0016 | 0.0016 | 0.0018 | 0.0007 | 0.0002 | - | 1054 |
| G | 0.0025 | 0.01 | 1.35 | 0.34 | 0.25 | 0.0019 | 0.0028 | 0.0031 | 0.0006 | 0.0001 | Sb:0.03 | 1003 |
| H | 0.0021 | 0.05 | 1.59 | 0.42 | 0.0005 | 0.0021 | 0.0023 | 0.0021 | 0.0003 | 0.0001 | Sn:0.06 | 976 |
| I | 0.0015 | 0.01 | 2.15 | 0.81 | 0.0002 | 0.0023 | 0.0017 | 0.0026 | 0.0005 | 0.0001 | REM:0.015 | 973 |
| J | 0.0023 | 0.01 | 2.08 | 0.78 | 0.0003 | 0.0018 | 0.0024 | 0.0033 | 0.0001 | 0.0002 | Mg:0.0012 | 961 |
| K | 0.0018 | 0.01 | 2.11 | 0.82 | 0.0002 | 0.0019 | 0.0022 | 0.0029 | 0.0002 | 0.0001 | Ca:0.0026 | 964 |

**Table 2**

| No. | Steel No. | Ratio of γ phase at slab heating temperature (%) | Reverse rolling during rough rolling | Temperature raised by reheating treatment (°C) | Hot-rolled sheet annealing | Recrystallization ratio before final cold rolling (%) | {100}<011> intensity before final cold rolling | Average heating rate from 600 °C to 720 °C in final annealing (°C/s) | Average heating rate from 720 °C to 760 °C in final annealing (°C/s) | Soaking temperature in final annealing (°C) | Magnetic flux density B₅₀ (T) | Iron loss W_{15/50} (W/kg) | Remarks |
|---|---|---|---|---|---|---|---|---|---|---|---|---|---|
| 1 | A | 100 | No | - | No | 62 | 8.5 | 110 | 8 | 820 | 1.721 | 4.52 | Comparative example |
| 2 | | | Yes | - | No | 63 | 6.3 | 110 | 8 | 820 | 1.735 | 4.41 | Example |
| 3 | | | No | 30 | No | 66 | 5.4 | 110 | 8 | 820 | 1.736 | 4.43 | Example |
| 4 | B | 100 | No | - | No | 32 | 9.2 | 150 | 10 | 900 | 1.692 | 3.51 | Comparative example |
| 5 | | | Yes | - | No | 36 | 7.2 | 150 | 10 | 900 | 1.708 | 3.42 | Example |
| 6 | | | No | 30 | No | 34 | 6.5 | 150 | 10 | 900 | 1.712 | 3.39 | Example |
| 7 | C | 100 | No | - | No | 25 | 9.5 | 210 | 10 | 990 | 1.705 | 2.85 | Comparative example |
| 8 | | | Yes | - | No | 27 | 7.1 | 210 | 10 | 990 | 1.716 | 2.79 | Example |
| 9 | | | No | 25 | No | 28 | 6.6 | 210 | 10 | 990 | 1.718 | 2.78 | Example |
| 10 | | | Yes | 40 | No | 25 | 5.1 | 210 | 10 | 990 | 1.725 | 2.71 | Example |
| 11 | | | Yes | 40 | No | 25 | 5.1 | 65 | 10 | 990 | 1.712 | 2.81 | Example |
| 12 | | | Yes | 40 | No | 25 | 5.1 | 40 | 10 | 990 | 1.704 | 2.83 | Comparative example |
| 13 | | | Yes | 40 | No | 25 | 5.1 | 210 | 6 | 990 | 1.713 | 2.76 | Example |
| 14 | | | Yes | 40 | No | 25 | 5.1 | 210 | 4 | 990 | 1.706 | 2.84 | Comparative example |
| 15 | | | Yes | 40 | 800 °C × 30 s | 42 | 4.2 | 40 | 10 | 990 | 1.721 | 2.75 | Comparative example |
| 16 | | | Yes | 40 | 800 °C × 30 s | 42 | 4.2 | 210 | 10 | 990 | 1.727 | 2.72 | Example |
| 17 | | | Yes | - | 850 °C × 30 s | 78 | 5.2 | 210 | 10 | 990 | 1.726 | 2.71 | Example |
| 18 | | | No | 25 | 850 °C × 30 s | 72 | 4.8 | 210 | 10 | 990 | 1.725 | 2.73 | Example |
| 19 | D | 100 | Yes | 40 | No | 26 | 5.3 | 30 | 10 | 950 | 1.698 | 2.96 | Comparative example |
| 20 | | | Yes | 40 | No | 25 | 5.4 | 200 | 10 | 950 | 1.719 | 2.85 | Example |
| 21 | E | 48 | Yes | 40 | No | 23 | 6.9 | 25 | 15 | 1010 | 1.693 | 2.32 | Comparative example |
| 22 | | | Yes | 40 | No | 22 | 6.8 | 200 | 9 | 1010 | 1.714 | 2.26 | Example |
| 23 | F | 19 | Yes | 30 | No | 18 | 10.6 | 30 | 15 | 900 | 1.695 | 3.26 | Comparative example |
| 24 | | | Yes | 30 | No | 21 | 10.3 | 160 | 10 | 900 | 1.696 | 3.25 | Comparative example |
| 25 | G | 100 | No | 30 | No | 33 | 6.4 | 150 | 10 | 900 | 1.723 | 3.25 | Example |
| 26 | H | 100 | Yes | 40 | No | 29 | 5.2 | 210 | 10 | 990 | 1.736 | 2.65 | Example |
| 27 | I | 100 | Yes | 40 | No | 27 | 5.3 | 200 | 10 | 950 | 1.721 | 2.71 | Example |
| 28 | J | 100 | Yes | 40 | No | 25 | 5.4 | 200 | 10 | 950 | 1.719 | 2.73 | Example |
| 29 | K | 100 | Yes | 40 | No | 25 | 5.3 | 200 | 10 | 950 | 1.722 | 2.69 | Example |

The magnetic properties of the product sheet may be affected by the Si content. For example, when the Si content is relatively low, the value of the magnetic flux density is relatively high. Therefore, the results of the magnetic property measurement were evaluated in relative terms among the Preparation Examples using slabs having the same chemical composition or being close in Si content as starting materials. Specifically, the Preparation Examples were divided into groups of: Preparation Examples 1 to 3 using the slab A as a starting material; Preparation Examples 4 to 5 using the slab B as a starting material and Preparation Example 25 using the slab G, which had a Si content close to that of the slab B, as a starting material; Preparation Examples 7 to 18 using the slab C as a starting material and Preparation Examples 21 to 22 and 26 using the slab F or H, which had a Si content close to that of the slab C, as a starting material; Preparation Examples 19 to 20 using the slab D as a starting material and Preparation Examples 27 to 29 using the slab I, J or K, which had a Si content close to that of the slab D, as a starting material; and Preparation Examples 21 to 22 using the slab E as a starting material. The results of magnetic property measurement were evaluated in relative terms within each group.

As indicated in Table 2, in all the groups, Examples satisfying the requirements of the present disclosure all produced a product sheet having excellent (high) magnetic flux density B₅₀ and low iron loss W_{15/50} compared with that of Comparative Examples that did not satisfy at least one of the requirements.

## Claims

1. A method of manufacturing a non-oriented electrical steel sheet, comprising:
subjecting a slab, which has a chemical composition containing, in mass%, C: 0.0050 % or less, P: 0.2 % or less, Si: 4.0 % or less, Mn: 3.0 % or less, Al: 2.0 % or less, S: 0.0050 % or less, N: 0.0050 % or less, O: 0.010 % or less, Ti: 0.0030 % or less and Nb: 0.0010 % or less, optionally, in mass%, at least one selected from the group consisting of Sn: 0.005 % or more and 0.20 % or less, Sb: 0.005 % or more and 0.20 % or less, Ca: 0.0005 % or more and 0.010 % or less, Mg: 0.0001 % or more and 0.0050 % or less, and REM: 0.001 % or more and 0.020 % or less, with the balance being Fe and inevitable impurities, to hot rolling with or without performing hot-rolled sheet annealing, and then to cold rolling either once, or twice or more with intermediate annealing performed therebetween, and then to final annealing, wherein
the slab has a ratio of γ phase of 30 % or more at a slab heating temperature,
a reheating treatment is performed to raise a material temperature by 20 °C or more between a start and an end of the hot rolling,
a material before final cold rolling, which is a material sheet immediately before being subjected to the last cold rolling, has a recrystallization ratio of less than 80 % and a {100}<011> intensity of 8 or less in a 1/4 layer surface from the surface layer in the sheet thickness direction, and
in the final annealing, an average heating rate from 600 °C to 720 °C is 50 °C/s or higher, and an average heating rate from 720 °C to 760 °C is 5 °C/s or higher.

2. The method of manufacturing a non-oriented electrical steel sheet according to claim 1, wherein reverse rolling is performed at least once during rough rolling in the hot rolling.
